# EUROPÄISCHE PATENTSCHRIFT

(11) **EP 0 871 229 B1**
(45) Veröffentlichungstag und Bekanntmachung des Hinweises auf die Patenterteilung: **07.01.2004**
(21) Anmeldenummer: 97121195.8
(22) Anmeldetag: 03.12.1997
(51) Int. Cl.: H01L 41/04

(54) **Verfahren und Vorrichtung zum Laden und Entladen eines piezoelektrischen Elements**
Method and apparatus for charging and discharging a piezoelectric element
Procédé et appareil pour charger et décharger un élément piézoélectrique

(30) Priorität: 09.04.1997 DE 19714608
(43) Veröffentlichungstag der Anmeldung: 14.10.1998
(73) Patentinhaber: ROBERT BOSCH GMBH, 70442 Stuttgart (DE)
(72) Erfinder: Reineke, Jörg, 70469 Stuttgart (DE); Hock, Alexander, 70435 Stuttgart (DE)

(56) Entgegenhaltungen:
- EP-A- 0 464 443
- DE-A- 4 435 832
- PATENT ABSTRACTS OF JAPAN vol. 016, no. 282 (M-1269), 23.Juni 1992 & JP 04 071859 A (BROTHER IND LTD), 6.März 1992,

## Beschreibung

Die vorliegende Erfindung betrifft ein Verfahren gemäß dem Oberbegriff des Patentanspruchs 1 und eine Vorrichtung gemäß dem Oberbegriff des Patentanspruchs 8, d.h. ein Verfahren und eine Vorrichtung zum Laden und Entladen eines piezoelektrischen Elements unter Verwendung eines für den Ladestrom und den Entladestrom als Induktanz wirkenden Elements.

Ein Verfahren und eine Vorrichtung zum Laden und Entladen eines piezoelektrischen Elements ist aus dem PATENT ABSTRACT OF JAPAN vol. 016, no. 282 (M-1269 bekannt. Dort werden mit einer Entlade-, einer Ladeschaltung sowie einer Induktanz mehrere Piezoaktoren gleichzeitig geladen bzw. entladen. Dabei können die verschiedenen piezoelektrischen Elemente nur alle gemeinsam geladen und/oder entladen werden. Für verschiedene Anwendungen, insbesondere zur Steuerung der Kraftstoffzumessung in eine Brennkraftmaschine mit mehreren Zylindern, bei denen jedem Injektor eines Zylinders ein piezoelektrisches Element zugeordnet ist, ist eine solche Einrichtung nicht geeignet, da mit einer solchen Einrichtung lediglich in alle Zylinder gleichzeitig Kraftstoff eingespritzt werden kann.

Eine weitere Vorrichtung und ein weiteres Verfahren zum Laden und Entladen eines piezoelektrischen Elements ist aus der DE 44 35 832 bekannt. Dort ist vorgesehen, dass lediglich ein piezoelektrisches Element mit mehreren Lade- und Entladeschaltungen geladen wird. Ein Entladen oder Laden mehrerer piezoelektrischer Aktoren ist dort nicht gezeigt.

Ferner ist Verfahren und eine weitere Vorrichtung zum Laden und Entladen piezoelektrischer Elemente aus der EP 464 443 bekannt. Dort ist vorgesehen, dass mehrere piezoelektrische Elemente unabhängig voneinander geladen und entladen werden. Hierzu ist vorgesehen, dass jedem piezoelektrischen Element eine Lade- und Entladeschaltung zugeordnet ist. Eine entsprechende Anordnung ist sehr aufwändig und kostenintensiv, da für jedes piezoelektrisches Element ein Ladeund ein Entladeschalter vorgesehen ist. Des weiteren sind zwei Induktanzen vorgesehen.

Bei den vorliegend näher betrachteten piezoelektrischen Elementen handelt es sich insbesondere, aber nicht ausschließlich um als Aktoren bzw. Stellglieder verwendete piezoelektrische Elemente. Piezoelektrische Elemente lassen sich für derartige Zwecke einsetzen, weil sie bekanntermaßen die Eigenschaft aufweisen, sich in Abhängigkeit von einer daran angelegten Spannung zusammenzuziehen oder auszudehnen.

Die praktische Realisierung von Stellgliedern durch piezoelektrische Elemente erweist sich insbesondere dann von Vorteil, wenn das betreffende Stellglied schnelle und/oder häufige Bewegungen auszuführen hat.

Der Einsatz von piezoelektrischen Elementen als Stellglied erweist sich unter anderem bei Kraftstoff-Einspritzdüsen für Brennkraftmaschinen als vorteilhaft. Zur Einsetzbarkeit von piezoelektrischen Elementen in Kraftstoff-Einspritzdüsen wird beispielsweise auf die EP 0 371 469 B1 und die EP 0 379 182 B1 verwiesen.

Piezoelektrische Elemente sind kapazitive Verbraucher, welche sich, wie vorstehend teilweise bereits angedeutet wurde, entsprechend dem jeweiligen Ladungszustand bzw. der sich daran einstellenden oder angelegten Spannung zusammenziehen und ausdehnen.

Zum Laden und Entladen eines piezoelektrischen Elements sind zwei grundlegende Prinzipien bekannt, nämlich das Laden und Entladen über einen ohmschen Widerstand und das Laden und Entladen über eine Spule, wobei sowohl der ohmsche Widerstand als auch die Spule unter anderem dazu dienen, den beim Laden auftretenden Ladestrom und den beim Entladen auftretenden Entladestrom zu begrenzen.

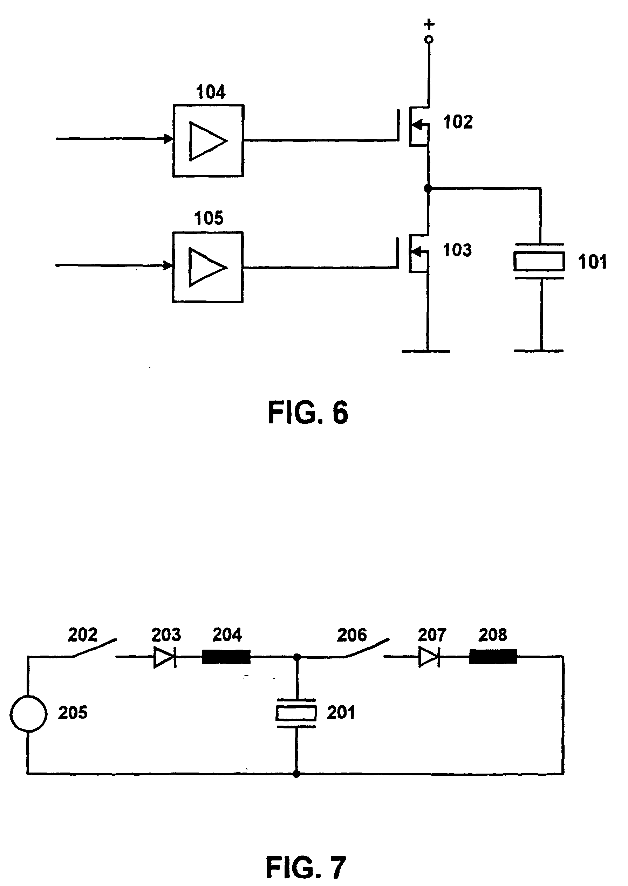

Die erste Variante, d.h. das Laden und Entladen über einen ohmschen Widerstand ist in Figur 6 veranschaulicht.

Das zu ladende bzw. zu entladende piezoelektrische Element, welches in der Figur 6 mit dem Bezugszeichen 101 bezeichnet ist, ist mit einem Ladetransistor 102 und einem Entladetransistor 103 verbunden.

Der Ladetransistor 102 wird durch einen Ladeverstärker 104 angesteuert und verbindet im durchgeschalteten Zustand das piezoelektrische Element 101 mit einer positiven Versorgungsspannung; der Entladetransistor 103 wird durch einen Entladeverstärker 105 angesteuert und verbindet im durchgeschalteten Zustand das piezoelektrische Element 101 mit Masse.

Im durchgeschalteten Zustand des Ladetransistors 102 fließt über diesen ein Ladestrom, durch welchen das piezoelektrische Element 101 geladen wird. Mit zunehmender Ladung des piezoelektrischen Elements 101 steigt die sich an diesem einstellende Spannung, und dementsprechend verändern sich auch dessen äußere Abmessungen. Ein Sperren des Ladetransistors 102, also ein Unterbrechen oder Beenden des Ladevorganges bewirkt, daß die im piezoelektrischen Element 101 gespeicherte Ladung bzw. die sich an diesem dadurch einstellende Spannung und damit auch die aktuellen äußeren Abmessungen des piezoelektrischen Elements 101 im wesentlichen unverändert beibehalten werden.

Im durchgeschalteten Zustand des Entladetransistors 103 fließt über diesen ein Entladestrom, durch welchen das piezoelektrische Element 101 entladen wird. Mit zunehmender Entladung des piezoelektrischen Elements 101 sinkt die sich an diesem einstellende Spannung, und dementsprechend verändern sich auch dessen äußere Abmessungen. Ein Sperren des Entladetransistors 103, also ein Unterbrechen oder Beenden des Entladevorganges bewirkt, daß die im piezoelektrischen Element 101 noch gespeicherte Ladung bzw. die sich an diesem dadurch einstellende Spannung und damit auch die aktuellen äußeren Abmessungen des piezoelektrischen Elements 101 beibehalten werden.

Der Ladetransistor 102 und der Entladetransistor 103 wirken für den Ladestrom bzw. für den Entladestrom wie steuerbare ohmsche Widerstände. Die dadurch gegebene Steuerbarkeit des Ladestroms und des Entladestroms ermöglicht es, den Ladevorgang und den Entladevorgang genau wunschgemäß ablaufen zu lassen. Der durch den Ladetransistor 102 fließende Ladestrom und der durch den Entladetransistor 103 fließende Entladestrom erzeugen dort jedoch nicht unerhebliche Verlustleistungen. Die in den Transistoren verbrauchte Verlustenergie ist pro Lade-Entladezyklus mindestens doppelt so hoch wie die im piezoelektrischen Element 101 gespeicherte Energie. Diese hohe Verlustenergie bewirkt eine sehr starke Aufheizung des Ladetransistors 102 und des Entladetransistors 103, was erkennbar ein Nachteil ist.

Das betrachtete Lade- und Entladeverfahren ist daher insbesondere dann, wenn häufige und/oder umfangreiche Lade- und Entladevorgänge durchzuführen sind, entweder gänzlich unbrauchbar oder allenfalls eingeschränkt brauchbar.

Nicht zuletzt deshalb kommt häufig die vorstehend bereits erwähnte zweite Variante zum Laden und Entladen des piezoelektrischen Elements, d.h. das Laden und Entladen über eine Spule zum Einsatz; eine praktische Realisierung dieser zweiten Variante ist in Figur 7 veranschaulicht.

Das zu ladende bzw. zu entladende piezoelektrische Element, welches in der Figur 7 mit dem Bezugszeichen 201 bezeichnet ist, ist Bestandteil eines über einen Ladeschalter 202 schließbaren Ladestromkreises und eines über einen Entladeschalter 206 schließbaren Entladestromkreises, wobei der Ladestomkreis aus einer Serienschaltung des Ladeschalters 202, einer Diode 203, einer Ladespule 204, des piezoelektrischen Elements 201, und einer Spannungsquelle 205 besteht, und wobei der Entladestromkreis aus einer Serienschaltung des Entladeschalters 206, einer Diode 207, einer Entladespule 208 und des piezoelektrischen Elements 2D1 besteht.

Die Diode 203 des Ladestromkreises verhindert, daß im Ladestromkreis ein das piezoelektrische Element entladender Strom fließen kann. Die Diode 203 und der Ladeschalter 202 sind gemeinsam als ein Halbleiterschalter realisierbar.

Die Diode 207 des Entladestromkreises verhindert, daß im Entladestromkreis ein das piezoelektrische Element ladender Strom fließen kann. Die Diode 207 und der Ladeschalter 206 sind wie die Diode 203 und der Ladeschalter 202 gemeinsam als ein Halbleiterschalter realisierbar.

Wird der normalerweise geöffnete Ladeschalter 202 geschlossen, so fließt im Ladestromkreis ein Ladestrom, durch welchen das piezoelektrische Element 201 geladen wird; die im piezoelektrischen Element 201 gespeicherte Ladung bzw. die sich an diesem dadurch einstellende Spannung und damit auch die aktuellen äußeren Abmessungen des piezoelektrischen Elements 201 werden nach dem Laden desselben im wesentlichen unverändert beibehalten.

Wird der normalerweise ebenfalls geöffnete Entladeschalter 206 geschlossen, so fließt im Entladestromkreis ein Entladestrom, durch welchen das piezoelektrische Element 201 entladen wird; der Ladezustand des piezoelektrischen Elements 201 bzw. die sich an diesem dadurch einstellende Spannung und damit auch die aktuellen äußeren Abmessungen des piezoelektrischen Elements 201 werden nach dem Entladen desselben im wesentlichen unverändert beibehalten.

Schaltungen dieser Art und Verfahren zum Laden und Entladen piezoelektrischer Elemente unter Verwendung derartiger Schaltungen sind aus den eingangs bereits erwähnten Druckschriften EP 0 371 469 B1 und EP 0 379 182 B1 bekannt

Die aus den genannten Druckschriften bekannten und vorstehend dem grundlegenden Prinzip nach beschriebenen Verfahren und Vorrichtungen sind Verfahren gemäß dem Oberbegriff des Patentanspruchs 1 bzw. Vorrichtungen gemäß dem Oberbegriff des Patentanspruchs 8.

Da bei Schaltungen gemäß der Figur 7 sowohl der Ladestromkreis als auch der Entladestromkreis frei von nennenswerten ohmschen Widerständen sind, ist die durch das Laden und Entladen des piezoelektrischen Elements (die durch das Fließen des Ladestroms und des Entladestroms durch ohmsche Widerstände) erzeugte Wärmeenergie äußerst gering.

Andererseits wird aber für die praktische Realisierung derartiger Schaltungen insbesondere wegen der nicht unerheblichen Größe der Ladespule 204 und der Entladespule 208 relativ viel Platz benötigt, wodurch das Laden und das Entladen von piezoelektrischen Elementen über ein für den Lade- bzw. den Entladestrom im wesentlichen als eine Induktanz wirkendes Element in bestimmten Fällen nicht oder jedenfalls nicht ohne weiteres möglich ist.

Der vorliegenden Erfindung liegt daher die Aufgabe zugrunde, das Verfahren gemäß dem Oberbegriff des Patentanspruchs 1 bzw. die Vorrichtung gemäß dem Oberbegriff des Patentanspruchs 8 derart weiterzubilden, daß dadurch auch unter beengten Verhältnissen ein effizientes Laden und Entladen piezoelektrischer Elemente ermöglicht wird.

Diese Aufgabe wird erfindungsgemäß durch die im kennzeichnenden Teil des Patentanspruchs 1 (Verfahren) und durch die im kennzeichnenden Teil des Patentanspruchs 8 (Vorrichtung) beanspruchten Merkmale gelöst.

Demnach ist vorgesehen,
- daß wenigstens entweder das Laden oder das Entladen des piezoelektrischen Elements zumindest teilweise unter getakteter Ladestromkreis- bzw. Entladestromkreis-Ansteuerung erfolgt (Patentanspruch 1) bzw.
- daß eine Steuereinrichtung vorgesehen ist, welche in der Lage ist, wenigstens entweder das Laden oder das Entladen des piezoelektrischen Elements zumindest teilweise unter getakteter Ladestromkreis- bzw. Entladestromkreis-Ansteuerung erfolgen zu lassen (Patentanspruch 8).

Durch die getaktete Ladestromkreis- bzw. Entladestromkreis-Ansteuerung kann das als Induktanz wirkende Element als ein Energie-Zwischenspeicher verwendet werden, der abwechselnd von der Stromversorgungsquelle (beim Laden) bzw. vom piezoelektrischen Element (beim Entladen) zugeführte elektrische Energie (in Form von magnetischer Energie) speichert und - nach einem entsprechenden Umschalten - die gespeicherte Energie in Form von elektrischer Energie an das piezoelektrische Element (beim Laden) bzw. einen anderen Energiespeicher oder einen elektrischen Verbraucher (beim Entladen) abgibt, wobei die Anzahl derartiger Lade- bzw. Entladetakte beliebig groß (≥ 1) sein kann.

Durch ein solches Betreiben des als Induktanz wirkenden Elements kann das piezoelektrische Element in beliebig vielen, beliebig großen und in beliebigen zeitlichen Abständen aufeinanderfolgenden Stufen geladen und entladen werden.

Als Folge dessen können sowohl das Ausmaß als auch der zeitliche Verlauf des Ladens und/oder des Entladens wunschgemäß beeinflußt werden, und zwar weitgehend unabhängig von den technischen Daten des als Induktanz verwendeten Elements und des piezoelektrischen Elements.

Die zumindest teilweise Entkopplung des Ausmaßes und des zeitlichen Verlaufs des Ladens und/oder des Entladens von den technischen Daten des als Induktanz verwendeten Elements und des piezoelektrischen Elements ermöglicht es, nur ein einziges als Induktanz wirkendes Element vorzusehen und dieses sowohl zum Laden als auch zum Entladen des piezoelektrischen Elements zu verwenden; beim eingangs beschriebenen herkömmlichen Verfahren zum Laden und Entladen eines piezoelektrischen Elements unter Verwendung eines als Induktanz wirkenden Elements ist eine Zusammenfassung der Ladespule und der Entladespule nicht ohne weiteres möglich, weil diese vorzugsweise unterschiedliche Induktivitäten aufweisen.

Das besagte einzige als Induktanz wirkende Element kann bei Bedarf sehr klein ausgebildet werden; die geringe Energiespeicherkapazität bzw. das schnelle Erreichen der Sättigung kann durch Vorsehen einer erhöhten Anzahl von Lade- und/oder Entladetakten ausgeglichen werden.

Das getaktete Laden und/oder Entladen des piezoelektrischen Elements kann beliebig mit anderen Lade- und/oder Entladeverfahren kombiniert werden. Als besonders einfach und wirkungsvoll erweist sich eine Kombination des erfindungsgemäßen und des herkömmlichen Ladens und/oder Entladens über ein als Induktanz wirkendes Element. So kann beispielsweise vorgesehen werden, das Laden wie herkömmlich über einen als Schwingkreis wirkenden Ladestromkreis, und das Entladen getaktet (oder umgekehrt) durchzuführen. Es können jedoch auch das Laden und/oder das Entladen teils über einen als Schwingkreis wirkenden Lade- bzw. Entladestromkreis und teils getaktet durchgeführt werden.

Unabhängig davon können der Ladestrompfad und der Entladeströmpfad im wesentlichen frei von elektrischen Verbrauchern gehalten werden, wodurch einerseits sehr wenig Energie verbraucht wird (weil die Verlustleistung gering ist und weil die beim Entladen aus dem piezoelektrischen Element abgezogene Energie zur Spannungsquelle zurückgeführt oder in einen Kondensator umgespeichert werden kann), und wodurch andererseits die beim Laden bzw. Entladen auftretende Erwärmung der Schaltung äußerst gering gehalten werden kann. Im Ergebnis können dadurch die einzelnen Bauteile (einschließlich der Stromversorgung) für relativ geringe Leistungen ausgelegt werden, und die bislang mitunter erforderlichen Maßnahmen zur Kühlung können entweder gänzlich entfallen oder jedenfalls in ihrem Umfang sehr gering gehalten werden.

Damit ist es auf einfache und elegante Weise möglich, auch unter beengten Verhältnissen ein effizientes Laden und Entladen piezoelektrischer Elemente durchzuführen.

Vorteilhafte Weiterbildungen der Erfindung sind Gegenstand der Unteransprüche.

Die Erfindung wird nachfolgend anhand von Ausführungsbeispielen unter Bezugnahme auf die Zeichnung näher erläutert. Es zeigen
- Figur 1: eine zum Laden und Entladen einer Vielzahl von piezoelektrischen Elementen nach dem erfindungsgemäßen Verfahren geeignete erf indungsgemäße Schaltung,
- Figur 2: eine Darstellung der sich während des Ladens eines piezoelektrischen Elements durch die Schaltung gemäß Figur 1 einstellenden Verhältnisse,
- Figur 3: eine Darstellung der sich während einer ersten Phase der Entladung der piezoelektrischen Elemente durch die Schaltung gemäß Figur 1 einstellenden Verhältnisse,
- Figur 4: eine Darstellung der sich während einer zweiten Phase der Entladung der piezoelektrischen Elemente durch die Schaltung gemäß Figur 1 einstellenden Verhältnisse,
- Figur 5: den zeitlichen Verlauf von sich beim Betrieb der Schaltung gemäß Figur 1 einstellenden Spannungs- und Stromverläufen,
- Figur 6: eine herkömmliche Schaltung zum Laden und Entladen eines piezoelektrischen Elements über für den Lade- und Entladestrom als ohmsche Widerstände wirkende Elemente, und
- Figur 7: eine herkömmliche Schaltung zum Laden und Entladen eines piezoelektrischen Elements über für den Lade- und Entladestrom als Spulen wirkende Elemente.

Die piezoelektrischen Elemente, deren Laden und Entladen im folgenden näher beschrieben wird, sind beispielsweise als Stellglieder in Kraftstoff-Einspritzdüsen (insbesondere in sogenannten Common Rail Injektoren) von Brennkraftmaschinen einsetzbar. Auf einen derartigen Einsatz der piezoelektrischen Elemente besteht jedoch keinerlei Einschränkung; die piezoelektrischen Elemente können grundsätzlich in beliebigen Vorrichtungen für beliebige Zwecke eingesetzt werden.

Es wird davon ausgegangen, daß sich die piezoelektrischen Elemente im Ansprechen auf das Laden ausdehnen und im Ansprechen auf das Entladen zusammenziehen. Die Erfindung ist selbstverständlich jedoch auch dann anwendbar, wenn dies gerade umgekehrt ist.

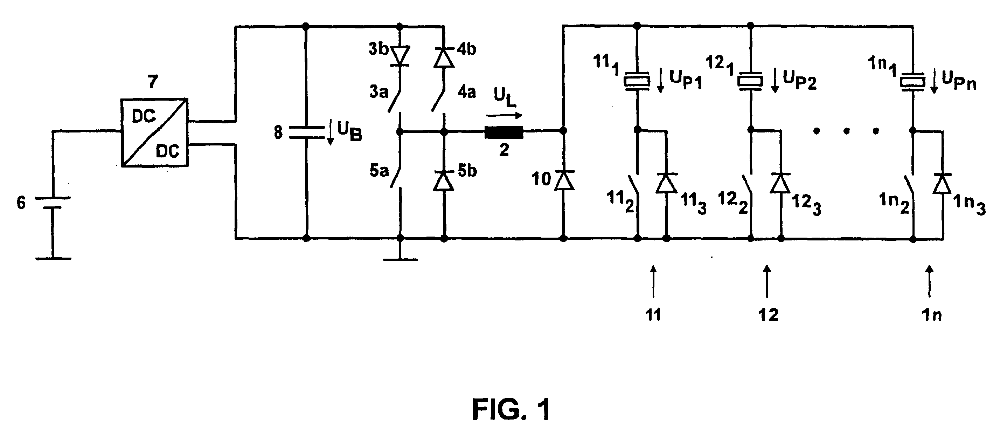

Es wird nun unter Bezugnahme auf Figur 1 ein Ausführungsbeispiel der erfindungsgemäßen Schaltung zur Durchführung des erfindungsgemäßen Verfahrens zum Laden und Entladen von piezoelektrischen Elementen beschrieben.

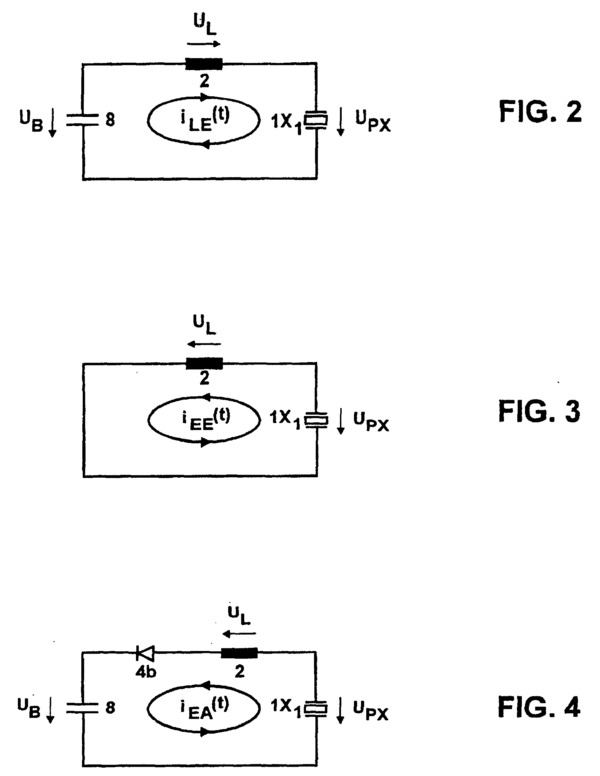

Die piezoelektrischen Elemente, die es im betrachteten Beispiel zu laden und zu entladen gilt, sind in parallel geschalteten Piezozweigen 11, 12, ... 1n enthalten und mit den Bezugszeichen 11₁, 12₁ ... 1n₁ (Figur 1) bzw. 1X₁ (Figuren 2 bis 4) bezeichnet.

Jeder der Piezozweige 11, 12, ... 1n enthält in Reihe zu dem jeweiligen piezoelektrischen Element 11₁, 12₁ ... 1n₁ einen Auswahlschalter 11₂, 12₂, ... 1n₂ mit parallel geschalteter Diode 11₃, 12₃, ... 1n₃. Über die Auswahlschalter 11₂, 12₂, ... 1n₂ ist bestimmbar, ob das im jeweiligen Piezozweig 11, 12, ... 1n enthaltene piezoelektrische Element 11₁, 12₁ ... 1n₁ geladen werden soll (zugeordneter Auswahlschalter geschlossen) oder nicht (zugeordneter Auswahlschalter geöffnet).

Die Auswahlschalter 11₂, 12₂, ... 1n₂ und die parallel dazu angeordneten Dioden 11₃, 12₃, ... 1n₃ können jeweils als elektronische Schalter mit parasitären Dioden wie beispielsweise MOS-FETs realisiert werden.

Parallel zu den Piezozweigen 11, 12 ... 1n ist eine Schutzdiode 10 vorgesehen, durch welche verhinderbar ist, daß die piezoelektrischen Elemente beim Entladen derselben zu weit entladen und dadurch negativ geladen werden, denn dies kann bestimmten piezoelektrischen Elementen unter Umständen schaden.

Wie aus der Figur 1 ersichtlich ist, liegt das jeweils eine Ende der Piezozweige 11, 12, ... 1n dauerhaft auf Masse (ist mit einem ersten Pol einer Spannungsquelle verbunden), wohingegen das andere Ende der Piezozweige 11, 12, ... 1n
- über ein als Induktanz wirkendes Element in Form einer Spule 2 und eine Parallelschaltung aus einem einen Ladeschalter 3a und eine Diode 3b enthaltenden Ladeschalterzweig und einem einen ersten Entladeschalter 4a und eine Diode 4b enthaltenden ersten Entladeschalterzweig mit dem zweiten Pol der Spannungsquelle sowie
- ebenfalls über die Spule 2 und einen zweiten Entladeschalter 5a mit parallel geschalteter Diode 5b mit dem ersten Pol der Spannungsquelle
verbunden ist.

Die genannte Spannungsquelle besteht aus einer Batterie 6 (beispielsweise einer KFZ-Batterie), einem dieser nachgeschalteten Gleichspannungswandler 7, und einem diesem nachgeschalteten, als Pufferkondensator dienenden Kondensator 8. Durch diese Anordnung wird die Batteriespannung (beispielsweise 12 V) in eine im wesentlichen beliebige andere Gleichspannung umgesetzt und als Versorgungsspannung bereitgestellt.

Der Ladeschalter 3a und die Diode 3b können als ein Halbleiterschalter realisiert sein; das selbe gilt für den ersten Entladeschalter 4a und die Diode 4b.

Der zweite Entladeschalter 5a und die Diode 5b können als elektronische Schalter mit parasitären Dioden wie beispielsweise MOS-FETs realisiert werden.

Einer oder mehrere der durch Schließen der Auswahlschalter 11₃, 12₃, ... 1n₃ auswählbaren Piezozweige 11, 12 ... 1n, die Spule 2, der Ladeschalter 3a, die Diode 3b und der Kondensator 8 bilden einen (über den Ladeschalter 3a öffen- und schließbaren) Ladestromkreis; die Reihenschaltung von kapazitiv (piezoelektrische Elemente 11₁, 12₁, ... 1n₁; Kondensator 8) und induktiv (Spule 2) wirkenden Elementen ermöglichen die Verwendung des Ladestromkreises als LC-Serienschwingkreis.

Die Piezozweige 11, 12, ... 1n, die Spule 2, der erste Entladeschalter 4a, die Diode 4b und der Pufferkondensator 8 bilden einen (über den ersten Entladeschalter 4a öffen- und schließbaren) ersten Entladestromkreis.

Die Piezozweige 11, 12, ... 1n, die Spule 2, der zweite Entladeschalter 5a und die dazu parallel liegende Diode 5b bilden einen (über den zweiten Entladeschalter 5a öffen- und schließbaren) zweiten Entladestromkreis.

Das Laden der piezoelektrischen Elemente 11₁, 12₁, ...1n₁ erfolgt durch einen (Lade-)Stromfluß im Ladestromkreis, und das Entladen durch (Entlade-)Stromflüsse im ersten und zweiten Entladestromkreis.

Das Laden und das Entladen der piezoelektrischen Elemente 11₁, 12₁, ...1n₁ erfolgt im vorliegenden Ausführungsbeispiel nach unterschiedlichen technischen Prinzipien, nämlich unter Betreiben des Ladestromkreises als Schwingkreis (beim Laden) bzw. unter getakteter Entladestromkreis-Ansteuerung (beim Entladen).

Wenn und solange weder ein Laden noch ein Entladen der piezoelektrischen Elemente erfolgt, sind der Ladeschalter 3a und die Entladeschalter 4a, 5a geöffnet. In diesem Zustand befindet sich die in der Figur 1 gezeigte Schaltung im stationären Zustand. D.h., die piezoelektrischen Elemente 11₁, 12₁, ...1n₁ behalten ihre Ladungszustände im wesentlichen unverändert bei, und es fließen keine Ströme.

Das Laden wird durch das Schließen des Ladeschalters 3a eingeleitet.

Welches bzw. welche der piezoelektrischen Elemente 11₁, 12₁, ...1n₁ bei geschlossenem Ladeschalter 3a geladen werden, wird, wie vorstehend bereits angedeutet wurde, durch die den jeweiligen piezoelektrischen Elementen zugeordneten Auswahlschalter 11₂, 12₂, ... 1n₂ bestimmt; es werden jeweils all diejenigen piezoelektrischen Elemente 11₁, 12₁, ...1n₁ geladen, deren Auswahlschalter 11₂, 12₂, ... 1n₂ während des Ladevorganges geschlossen sind.

Die Auswahl der zu ladenden piezoelektrischen Elemente 11₁, 12₁, ...1n₁ durch Schließen der zugeordneten Auswahlschalter 11₂, 12₂, ... 1n₂ und das Aufheben der Auswahl durch Öffnen der betreffenden Auswahlschalter wird in der Regel außerhalb des Ladevorganges (vor dem Schließen bzw. nach dem Öffnen des Ladeschalters 3a) erfolgen; in bestimmten Fällen, zum Beispiel wenn mehrere der piezoelektrischen Elemente 11₁, 12₁, ...1n₁ gleichzeitig unterschiedlich stark aufgeladen werden sollen, kann das Öffnen und Schließen der Auswahlschalter 11₂, 12₂, ... 1n₂ jedoch auch während des Ladevorganges (bei geschlossenem Ladeschalter 3a) erfolgen.

Beim vorliegend betrachteten Beispiel werden die piezoelektrischen Elemente 11₁, 12₁, ...1n₁ in aufeinanderfolgenden Ladevorgängen einzeln geladen.

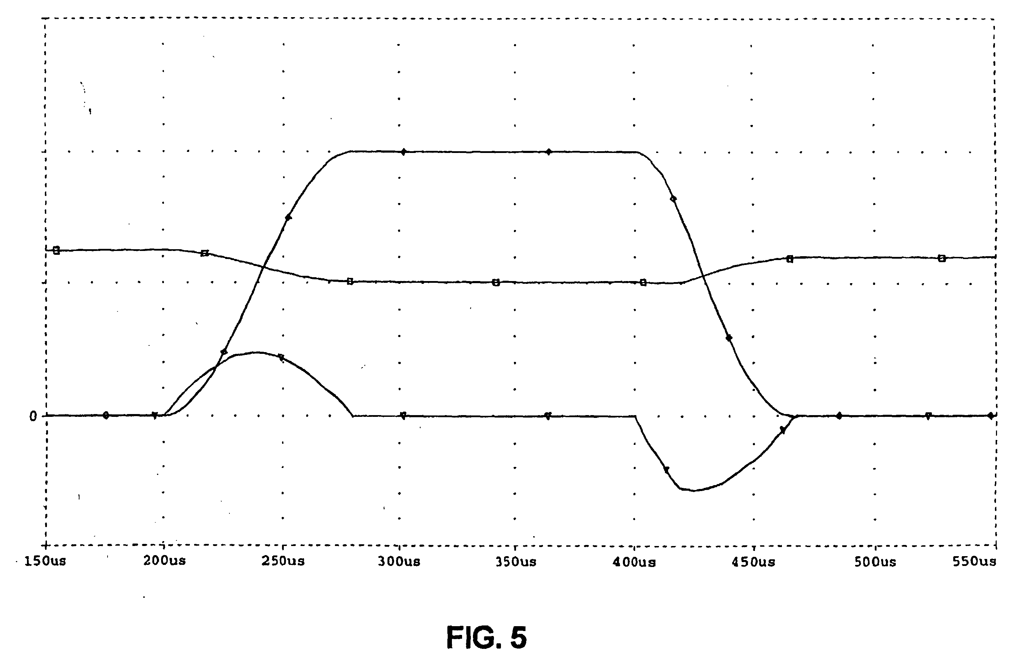

Wird der Ladeschalter 3a geschlossen, so können durch die Spannungsquelle (Batterie 6, Gleichspannungswandler 7) bereitgestellte oder im Kondensator 8 gespeicherte Ladungen zu dem zu ladenden piezoelektrischen Element fließen. Die Größe und der zeitliche Verlauf des sich dadurch einstellenden (Lade-)Stroms hängt dabei im wesentlichen von dem durch das piezoelektrische Element, die Spule 2 und den Kondensator 8 gebildeten LC-Reihenschwingkreis ab; die sich bei geschlossenem Ladeschalter 3a ergebende Verschaltung dieser Elemente und die sich dort einstellenden Ströme und Spannungen sind in Figur 2 veranschaulicht. Wie aus der später noch genauer beschriebenen Figur 5 ersichtlich ist, steigt der (in der Figur 2 mit i_{LE}(t) bezeichnete) Ladestrom nach dem Schließen des Ladeschalters 3a mehr oder weniger schnell bis zu einem Maximum an und nimmt dann wieder mehr oder weniger schnell ab; eine richtungsmäßige Umkehr des Stromflusses, durch welche das piezoelektrische Element wieder entladen würde, ist durch die Diode 3b ausgeschlossen.

Der durch den Ladestrom zum zu ladenden piezoelektrischen Element bewirkte Ladungstransport hat eine Zunahme der im piezoelektrischen Element gespeicherten Ladung und damit auch eine Zunahme der sich am piezoelektrischen Element einstellenden Spannung und der Ausdehnung des piezoelektrischen Elements zur Folge.

Das Laden des piezoelektrischen Elements dauert im betrachteten Ausführungsbeispiel an, bis der Ladestromfluß von sich aus wieder auf Null abgefallen ist; das Laden beginnt und endet also mit der positiven Strom-Halbwelle der ersten Schwingkreis-Schwingung. Erst danach wird der Ladeschalter 3a wieder geöffnet.

Die im piezoelektrischen Element akkumulierten Ladungen, die sich am piezoelektrischen Element einstellende Spannung und die Ausdehnung des piezoelektrischen Elements bleiben nach dem Abschluß des Ladevorganges im wesentlichen unverändert erhalten.

Wie stark das piezoelektrische Element aufgeladen wird, hängt im betrachteten Ausführungsbeispiel im wesentlichen ausschließlich von den technischen Daten des zu ladenden piezoelektrischen Elements, der Spule 2 und des Kondensators 8 ab, denn der Ladeschalter 3a wird ja erst wieder geöffnet, nachdem das Laden infolge des Rückgangs des Ladestroms auf Null bereits beendet ist. Im betrachteten Beispiel ist die Spule 2 daher so zu dimensionieren, daß das zu ladende piezoelektrische Element durch die positive Strom-Halbwelle der ersten Schwingkreis-Schwingung wunschgemäß geladen wird.

Das Entladen der piezoelektrischen Elemente 11₁, 12₁, ... 1n₁ erfolgt im betrachteten Ausführungsbeispiel getaktet (unter getakteter Entladestromkreis-Ansteuerung), wobei der erste Entladeschalter 4a (der erste Entladestromkreis) und der zweite Entladeschalter 5a (der zweite Entladestromkreis) wie nachfolgend näher beschrieben zu bestimmten Zeitpunkten geschlossen und geöffnet werden; der Ladeschalter 3a bleibt hierbei geöffnet.

Das Entladen der piezoelektrischen Elemente 11₁, 12₁ ... 1n₁ erfolgt unabhängig von der Stellung der zugeordneten Auswahlschalter 11₂, 12₂ ... 1n₂, denn der die Entladung der piezoelektrischen Elemente bewirkende Entladestrom im ersten und zweiten Entladestromkreis kann auch über die den jeweiligen piezoelektrischen Elementen zugeordneten Dioden 11₃, 12₃, ... 1n₃ fließen. Durch den Entladevorgang werden daher jeweils sämtliche vollständig oder teilweise geladenen piezoelektrischen Elemente 11₁, 12₁ ... 1n₁ entladen.

Das Entladen wird durch das Schließen des zweiten Entladeschalters 5a (Schließen des zweiten Entladestromkreises) eingeleitet.

In der dadurch begonnenen ersten Entladetaktphase stellen sich die in der Figur 3 gezeigten Verhältnisse ein. D.h., es wird ein aus einer Reihenschaltung aus den (parallel angeordneten) piegoelektrischen Elementen 11₁, 12₁, ... 1n₁ (1X₁) und der Spule 2 bestehender geschlossener Stromkreis gebildet, in welchem ein wie in der Figur 3 durch Pfeile angedeuteter (Entlade-)Strom i_{EE}(t) fließt. Dieser Entladestromfluß bewirkt, daß die in den piezoelektrischen Elementen 11₁, 12₁, ... 1n₁ gespeicherte Energie (gegebenenfalls auch nur ein Teil derselben) in die Spule 2 transportiert und dort in Form von magnetischer Energie gespeichert wird. Entsprechend dem Energietransfer von den piezoelektrischen Elementen 11₁, 12₁, ... 1n₁ zur Spule 2 nehmen die sich an den piezoelektrischen Elementen einstellenden Spannungen und deren äußere Abmessungen ab.

Irgendwann danach, spätestens aber mit dem Öffnen des zweiten Entladeschalters 5a wird der erste Entladeschalter 4a und damit auch der erste Entladestromkreis geschlossen.

Eine vorbestimmte Zeit nach dem Schließen des zweiten Entladeschalters 5a wird dieser (und damit auch der zweite Entladestromkreis) wieder geöffnet.

In der dadurch begonnenen zweiten Entladetaktphase stellen sich die in der Figur 4 gezeigten Verhältnisse ein. D.h., es wird ein aus einer Reihenschaltung aus den (parallel angeordneten) piezoelektrischen Elementen 11₁, 12₁, ... 1n₁ (1X₁), dem Kondensator 8, der Diode 4b und der Spule 2 bestehender geschlossener Stromkreis gebildet, in welchem ein wie in der Figur durch Pfeile angedeuteter (Entlade-)Strom i_{EA}(t) fließt. Dieser Entladestromfluß bewirkt, daß in der ersten Entladetaktphase in die Spule 2 eingespeicherte Energie vollständig in den Kondensator 8 umgespeichert (zurückgespeist) wird.

Wenn hier, zuvor oder im folgenden von einem vollständigen Umspeichern der Energie die Rede ist, so bezieht sich dies auf die Energie, über die tatsächlich verfügt werden kann; gewisse Energieverluste (insbesondere in den piezoelektrischen Elementen selbst) sind unvermeidbar und schmälern natürlich den Umfang der umspeicherbaren Energie.

Nach erfolgtem Energietransport von der Spule 2 zum Kondensator 8 kann der erste Entladeschalter 4a wieder geöffnet werden.

Das Entladen der piezoelektrischen Elemente ist im vorliegenden Ausführungsbeispiel damit beendet; das getaktete Entladen erfolgt im betrachteten Beispiel nämlich in nur einem einzigen Takt, weil die piezoelektrischen Elemente hierdurch vollständig oder jedenfalls so weit, daß sie danach wieder ihre Ausgangsgröße annehmen, entladen werden können.

Sollten die piezoelektrischen nach dem einen Entladetakt noch nicht vollständig oder wunschgemäß weit entladen sein, können dem beschriebenen ersten Entladetakt beliebig viele weitere Entladetakte folgen, wobei sich in jedem Entladetakt die vorstehend beschriebenen Vorgänge wiederholen.

Das getaktete Entladen kann auch mit einem beliebigen anderen Entlademechanismus kombiniert werden, wobei sich hierzu aufgrund des Vorhandenseins der Spule 2 insbesondere solche Entladeverfahren anbieten, durch die das Entladen ebenfalls unter Verwendung einer Spule, also beispielsweise über einen als Schwingkreis wirkenden oder betriebenen Entladestromkreis eignen.

Es besteht auch keine Einschränkung darauf, das Laden der piezoelektrischen Elemente wie vorstehend beschrieben allein unter Verwendung eines als Schwingkreise wirkenden (betriebenen) Ladestromkreises (durch die positive Strom-Halbwelle der ersten Schwingkreis-Schwingung) erfolgen zu lassen. Ergänzend oder alternativ kann auch hierbei ein getaktetes Laden der piezoelektrischen Elemente erfolgen.

Betreibt man die in der Figur 1 gezeigte Schaltung, genauer gesagt das Laden und Entladen der piezoelektrischen Elemente wie vorstehend beschrieben, so stellen sich die in der Figur 5 gezeigten Strom- und Spannungsverläufe ein. Die gezeigten Strom- und Spannungsverläufe sind das Ergebnis eines Simulation, in welcher das piezoelektrische Element als reine Kapazität modelliert wurde.

Die in der Figur 5 dargestellten Kurven sind mit deren Meßgrößen repräsentierenden Symbolen versehen. Von den verwendeten Symbolen repräsentieren
- □: die sich am Kondensator 8 einstellende Spannung U_{B},
- 0: die sich am zu ladenden piezoelektrischen Element einstellende Spannung, und
- V: den die Spule 2 durchfließenden (Lade- bzw. Entlade-) Strom

Die in der Figur 5 gezeigten Strom- und Spannungsverläufe veranschaulichen den Ladevorgang (im Bereich von etwa 200 µs bis 280 µs auf der Zeitskala) und den Entladevorgang (im Bereich von etwa 400 µs bis 420 µs (erste Phase des Entladetaktes) und 420 µs bis 470 µs (zweite Phase des Entladetaktes) auf der Zeitskala) eines piezoelektrischen Elements; sie sind bei der vorstehend vermittelten Kenntnis des Aufbaus, der Funktion und der Wirkungsweise der Schaltung gemäß der Figur 1 ohne weiteres verständlich und bedürfen keiner näheren Erläuterung.

Wie aus der Figur 5 ersichtlich ist, weist die sich am zu ladenden und entladenden piezoelektrischen Element einstellende Spannung einen äußerst homogenen Verlauf auf.

Gleichzeitig ist die Schaltung, durch die das Laden und Entladen bewirkt wird, genauer gesagt die Schaltung gemäß Figur 1 denkbar einfach aufgebaut und optimal im Wirkungsgrad. Hierzu tragen insbesondere vier Faktoren bei, nämlich
1) daß das Laden und das Entladen über ein und die selbe Spule (nämlich die Spule 2) erfolgen,
2) daß das Laden und/oder das Entladen zumindest teilweise getaktet erfolgen,
3) daß die Verlustenergie durch Wärmeerzeugung in ohmschen Widerständen vernachlässigbar gering ist, und
4) daß die in den piezoelektrischen Elementen gespeicherte Energie im wesentlichen vollständig in den Kondensator 8 zurückgespeichert wird und somit für eine sofortige Wiederverwendung zur Verfügung steht.

Der erstgenannte Punkt ermöglicht es, die Anzahl der Bauelemente, insbesondere die Anzahl der von Haus aus relativ großen Spulen minimal zu halten, wobei die reduzierte Anzahl von Spulen aufgrund des zweiten Punkts kleiner als bisher zum Laden und/oder Entladen von piezoelektrischen Elemente verwendete Spulen gemacht werden können. Der dritte und der vierte der oben genannten Punkte ermöglichen es, die Batterie 6 und den Gleichspannungswandler 7 für nur relativ kleine Leistungen auszulegen.

Sämtliche der genannten Punkte - sei es allein oder in Kombination - ermöglichen es oder tragen zumindest dazu bei, die zum Laden und Entladen von piezoelektrischen Elementen vorzusehende Schaltungen auf kleinstem Raum unterzubringen und die Kosten für deren Herstellung und Betrieb minimal zu halten.

Zusammenfassend kann daher festgestellt werden, daß es die erfindungsgemäße Vorrichtung und das erfindungsgemäße Verfahren es auf einfache und elegante Art und Weise ermöglichen, auch unter beengten Verhältnissen ein effizientes Laden und Entladen piezoelektrischer Elemente durchzuführen.

## Patentansprüche

1. Verfahren zum Laden und Entladen eines piezoelektrischen Elements (11₁, 12₁, ...1n₁) unter Verwendung eines für den Ladestrom und den Entladestrom als Induktanz wirkenden Elements (2), wobei entweder das Laden oder das Entladen des piezoelektrischen Elements (11₁, 12₁, ...1n₁) zumindestens teilweise unter getakteter Ladestromkreis- bzw. Entladestromkreis-Ansteuerung erfolgt, **dadurch gekennzeichnet, dass** das als Induktanz wirkende Element (2) zum Laden und Entladen einer Vielzahl von in parallel geschalteten Zweigen (11, 12, ...1n) vorgesehenen piezoelektrischen Elementen (11₁, 12₁, ...1n₁) verwendet wird, wobei das oder die piezoelektrischen Elemente(11₁, 12₁, ...1n₁), die während eines jeweiligen Ladevorganges geladen und/oder entladen werden sollen, über zugeordnete Auswahlschalter ausgewählt werden.

2. Verfahren nach Anspruch 1, **dadurch gekennzeichnet, dass** als als Induktanz wirkendes Element (2) eine Spule verwendet wird.

3. Verfahren nach Anspruch 2, **dadurch gekennzeichnet, dass** das Laden des piezoelektrischen Elements (11₁, 12₁, ...1n₁) über einen die Spule (2) und das zu ladenden piezoelektrische Element enthaltenen Ladestromkreis erfolgt und dass das Entladen des piezoelektrischen Elements (11₁, 12₁, ...1n₁) über einen ersten und einen zweiten, jeweils die Spule (2) und das zu entladende piezoelektrische Element enthaltenden Entladestromkreis erfolgt.

4. Verfahren nach Anspruch 2, **dadurch gekennzeichnet, dass** der Ladestromkreis während des Ladens des piezoelektrischen Elements (11₁, 12₁, ...1n₁) als Schwingkreis betrieben wird, und zwar derart, dass das Laden durch die positive Stromhalbwelle einer ersten Schwingkreisschwingung bewirkt wird.

5. Verfahren nach Anspruch 3 oder 4, **dadurch gekennzeichnet, dass** der erste Entladestromkreis und der zweite Entladestromkreis während des Entladens des piezoelektrischen Elements (11₁, 12₁, ..1n₁) derart geöffnet und geschlossen werden, dass im piezoelektrischen Element gespeicherte Energie unter vorübergehender Zwischenspeicherung in der Spule (2) aus diesem abgeführt wird.

6. Verfahren nach Anspruch 5, **dadurch gekennzeichnet, dass** die in einer ersten Entladetaktphase über den zweiten Entladestromkreis in die Spule (2) umgespeicherte Energie in einer zweiten Entladetaktphase über den ersten Entladestromkreis an einen einer Versorgungsspannungsquelle (6, 7) nachgeschalteten Pufferkondensator (8) abgegeben wird.

7. Verfahren nach einem der vorhergehenden Ansprüche, **dadurch gekennzeichnet, dass** das oder die piezoelektrischen Elemente (11₁, 12₁, ...1n₁) vor einem Aufladen auf negative Potentiale geschützt werden.

8. Vorrichtung zum Laden und Entladen eines piezoelektrischen Elements (11₁, 12₁, ...1n₁) unter Verwendung eines für den Ladestrom und den Entladestrom als Induktanz wirkenden Elements (2), wobei entweder das Laden oder das Entladen des piezoelektrischen Elements (11₁, 12₁, ...1n₁) zumindestens teilweise unter getakteter Ladestromkreis- bzw. Entladestromkreis-Ansteuerung erfolgt, **dadurch gekennzeichnet dass** Mittel vorgesehen sind, die das als Induktanz wirkende Element (2) zum Laden und Entladen einer Vielzahl von in parallel geschalteten Zweigen (11, 12, ...1n) vorgesehenen piezoelektrischen Elementen (11₁, 12₁, ...1n₁) verwenden, und die das oder die piezoelektrischen Elemente (11₁, 12₁, ...1n₁), die während eines jeweiligen Ladevorganges geladen und/oder entladen werden sollen, über zugeordnete Auswahlschalter auswählen.

## Claims

1. Method for charging and discharging a piezoelectric element (11₁, 12₁, ... 1n₁) using an element (2) which acts as an inductance for the charge current and the discharge current, the charging or the discharging of the piezoelectric element (11₁, 12₁, ... 1n₁) taking place at least partially with clocked driving of the charge circuit or discharge circuit, **characterized in that** the element (2) which acts as an inductance is used for charging and discharging a plurality of piezoelectric elements (11₁, 12₁ ... 1n₁) which are provided in branches (11, 12, .. 1n) which are connected in parallel, the piezoelectric element or elements (11₁, 12₁, ... 1n₁) which are to be charged and/or discharged during a respective charging process being selected by means of assigned selection switches.

2. Method according to Claim 1, **characterized in that** a coil is used as the element (2) which acts as an inductance.

3. The method as claimed in Claim 2, **characterized in that** the charging of the piezoelectric element (11₁, 12₁, ... 1n₁) is carried out by means of a charge current which contains the coil (2) and the piezoelectric element to be charged, and **in that** the discharging of the piezoelectric element (11₁, 12₁, ... 1n₁) is carried out by means of a first and a second discharge circuit which respectively contain the coil (2) and the piezoelectric element to be discharged.

4. Method according to Claim 2, **characterized in that** the charge circuit is operated as an oscillatory circuit during the charging of the piezoelectric element (11₁, 12₁, ... 1n₁), specifically in such a way that the charging is brought about by the positive current half wave of a first oscillation of an oscillatory circuit.

5. Method according to Claim 3 or 4, **characterized in that** the first discharge circuit and the second discharge circuit are opened and closed during the discharging of the piezoelectric element (11₁, 12₁, ... 1n₁) in such a way that energy stored in the piezoelectric element is conducted away from it with temporary buffering in the coil (2).

6. Method according to Claim 5, **characterized in that** the energy which is restored in the coil (2) via the second discharge current in a first discharge clocking phase is output in a second discharge clocking phase, via the first discharge circuit, to a buffer capacitor (8) which is connected downstream of a supply voltage source (6, 7).

7. Method according to one of the preceding claims, **characterized in that** the piezoelectric element or elements (11₁, 12₁, ... 1n₁) is protected against charging to negative potentials.

8. Device for charging and discharging a piezoelectric element (11₁, 12₁, ... 1n₁) using an element (2) which acts as an inductance for the charge current and the discharge current, the charging or the discharging of the piezoelectric element (11₁, 12₁, ... 1n₁) taking place at least partially with clocked driving of the charge circuit or discharge circuit, **characterized in that** means are provided which use the element (2) which acts as an inductance for charging and discharging a plurality of piezoelectric elements (11₁, 12₁, ... 1n₁) which are provided in branches (11, 12 ... 1n) connected in parallel, and which select the piezoelectric element or elements (11₁, 12₁, ... 1n₁), which are to be charged and/or discharged during a respective charge process, by means of assigned selection switches.

## Revendications

1. Procédé de charge et décharge d'un élément piézoélectrique (11₁, 12₁..... 1n₁) par utilisation d'un élément (2) agissant comme inductance pour le courant de charge et le courant de décharge, dans lequel au soit la charge soit la décharge de l'élément piézoélectrique (11₁, 12₁..... 1n₁) est effectuée au moins en partie par commande cyclique du circuit de courant de charge et du circuit de courant de décharge,
**caractérisé en ce que**
l'élément agissant comme inductance (2) est utilisé pour la charge et la décharge d'une pluralité d'éléments piézoélectriques (11₁, 12₁..... 1n₁) prévus dans des branches (11, 12,... 1n) montées en parallèle, l'élément ou les éléments piézoélectriques (11₁, 12₁..... 1n₁) qui doivent être chargés et/ou déchargés pendant une opération de charge respective est choisi/sont choisis par des commutateurs-sélecteurs associés.

2. Procédé selon la revendication 1,
**caractérisé en ce qu'**
une bobine est utilisée comme élément agissant comme inductance (2).

3. Procédé selon la revendication 2,
**caractérisé en ce que**
la charge de l'élément piézoélectrique (11₁, 12₁..... 1n₁) est effectuée au moyen d'une bobine (2) et du circuit de courant de charge contenant l'élément piézoélectrique à charger et que la décharge de l'élément piézoélectrique (11₁, 12₁..... 1n₁) est effectuée au moyen d'une première et d'une deuxième bobine (2) et du circuit de courant de décharge contenant l'élément piézoélectrique à décharger.

4. Procédé selon la revendication 2,
**caractérisé en ce que**
pendant la charge de l'élément piézoélectrique (11₁, 12₁..... 1n₁), le circuit de courant de charge fonctionne comme circuit oscillant, et ceci de façon que la charge est effectuée par la demi-onde de courant positive d'une première oscillation du circuit oscillant.

5. Procédé selon la revendication 3 ou 4,
**caractérisé en ce que**
pendant la décharge de l'élément piézoélectrique (11₁, 12₁..... 1n₁), le premier circuit de courant de décharge et le deuxième circuit de courant de décharge s'ouvrent et se ferment de façon que l'énergie accumulée dans l'élément piézoélectrique est dissipée de celui-ci par accumulation intermédiaire temporaire dans la bobine (2).

6. Procédé selon la revendication 5,
**caractérisé en ce que**
l'énergie transférée par le deuxième circuit de courant de décharge pour accumulation dans la bobine (2) durant une première phase cyclique de décharge est cédée durant une deuxième phase de décharge, par le premier circuit de courant de décharge, à un condensateur tampon (8) monté en aval d'une source de tension d'alimentation (6, 7).

7. Procédé selon l'une des revendications précédentes,
**caractérisé en ce que**
l'élément ou les éléments piézoélectriques 11₁, 12₁..... 1n₁) sont protégés avant une charge sur potentiels négatifs.

8. Dispositif de charge et décharge d'un élément piézoélectrique (11₁, 12₁..... 1n₁) par utilisation d'un élément (2) agissant comme inductance pour le courant de charge et le courant de décharge, dans lequel au soit la charge soit la décharge de l'élément piézoélectrique (11₁, 12₁..... 1n₁) est effectuée au moins en partie par commande cyclique du circuit de courant de charge et du circuit de courant de décharge,
**caractérisé en ce qu'**
il est prévu des moyens qui utilisent l'élément agissant comme inductance (2) est utilisé pour la charge et la décharge d'une pluralité d'éléments piézoélectriques (11₁, 12₁..... 1n₁) prévus dans des branches (11, 12,... 1n) montées en parallèle, et qui sélectionnent au moyen de commutateurs-sélecteurs associés l'élément ou les éléments piézoélectriques (11₁, 12₁..... 1n₁) qui doivent être chargés et/ou déchargés pendant une opération de charge respective.
